# EUROPEAN PATENT SPECIFICATION

(11) **EP 3 313 639 B1**
(45) Date of publication and mention of the grant of the patent: **12.01.2022**
(21) Application number: 16733047.1
(22) Date of filing: 23.06.2016
(51) Int. Cl.: B29C 43/02, B29K 105/00, B29K 105/08, B29K 105/12, B29C 33/42, B29L 31/30

(54) **IMPROVEMENTS IN OR RELATING TO THREE DIMENSIONAL MOULDINGS**
VERBESSERUNGEN AN ODER IM ZUSAMMENHANG MIT DREIDIMENSIONALEN FORMUNGEN
AMÉLIORATIONS DE OU ASSOCIÉES À DES MOULAGES TRIDIMENSIONNELS

(30) Priority: 23.06.2015 EP 15173467
(43) Date of publication of application: 02.05.2018
(73) Proprietor: Hexcel Reinforcements SASU, 01120 Dagneux (FR)
(72) Inventor: DUCROT, Mayeul, 01120 Dagneux (FR)
(74) Representative: TLIP Limited
(86) International application number: PCT/EP2016/064601
(87) International publication number: WO 2016/207309

(56) References cited:
- EP-A1- 0 531 840
- EP-A1- 2 415 579
- EP-B1- 0 531 840
- WO-A1-2006/122801
- US-A1- 2010 108 812

## Description

The present invention relates to improvements in or relating to three dimensional mouldings and in their production. In particular the invention is concerned with the production of three dimensional mouldings from two dimensional blanks. The term blank is used to describe a two dimensional mouldable material fed to a mould to be moulded and typically comprising a fibrous material contained within a matrix of an uncured or partially cured but curable resin, initially the resin may be present in particulate form such as powdered form which is melted prior to curing to flow and encase the fibrous material or the matrix may be a liquid resin. In particular the blank is made of a moulding compound such as a curable fibre reinforced matrix.

Moulding compounds are used in the production of moulded articles and can be laid up in layers in a compression mould where they are heated and compressed so that the resin flows to enclose the fibrous reinforcement and the resin is also cured so that, upon removal from the mould and cooling, a strong homogeneous moulding is obtained. This technique works satisfactorily for two dimensional mouldings, which are planar or have a gentle undulating profile. However, it is not possible to successfully mould two dimensional blanks to produce mouldings having sharp projections, such as ribs and stiffeners, particularly ribs and stiffeners extending vertically from the surface which are frequently required in components made from moulding compounds that are used, for example, in the automobile, aircraft, wind energy, construction and sporting goods industries.

It is current practice to provide additional strips or pieces of moulding compound in the location of a protrusion such as a rib. This technique requires additional manufacturing steps and is therefore time consuming. It also results in the production of scrap material. Furthermore, it can result in imperfections on the surface of the moulding and, in particular, on the surface of the protrusion.

EP2415579 discloses a sheet press molding method that can create molded articles having low thickness deviation. In the method, a molded article is formed by applying pressure to a sheet material using a pair of dies, at least one of which has a prescribed recess-projection pattern comprising recess and projection portions.

EP0531840 discloses a process and a fibre mat for producing a reinforced plastic moulding, a fibre mat with a binder being preformed with heating to form a preform and the latter being compression-moulded in a compression mould with moulding compound to form a compression moulding.

The present invention aims to obviate or at least mitigate the above described problems and/or to provide improvements generally.

According to the invention there is provided a process as defined in any one of the accompanying claims.

The present invention therefore provides a process for the production of three dimensional mouldings from a two dimensional blank comprising providing a stack of at least two blanks, each blank comprising a quasi-isotropic chopped moulding compound comprising a fibrous reinforcement material and a liquid or particulate epoxy resin material in the form of randomly orientated chips of chopped unidirectional tape;
removing at least part of the uppermost or lowermost blank at the location where protrusions are to be formed during moulding and compression to create a recess at the surface of the blank in the form of a slit or cut for directing flow at the surface of the moulding compound within the cavity of the compression mould during compression moulding;
and moulding the stack of blanks in a compression mould designed for formation of the three dimensional moulding under conditions whereby the removed portion acts as a guide so that the moulding compound flows into the removed area in the uppermost or lowermost layer and the sections of the mould defining the three dimensional structure to produce a three dimensional moulding.

The invention therefore provides a simpler process for the production of three dimensional mouldings from two dimensional blanks of curable material. Additionally the mouldings produced in the invention can have an improved surface finish because the surface including the projections that are part of the three dimensional structure are continuous with the planar surface of the moulding from which they project.

In this invention the mould cavity is the space within the mould available for the compression moulding of moulding material. The cavity may have a complex three dimensional shape, and the term recesses is used to describe the spaces in the mould walls into which the moulding compound can flow during the moulding process to produce protuberances, such as ribs on the moulding.

The invention is particularly useful in the production of mouldings provided with upstanding, typically vertical reinforcing or strengthening sections, such as ribs or other stiffeners, as are required in components useful in the automobile, aerospace, construction, wind energy and sporting goods industries. The invention is applicable to mouldings of any size and shape.

The fibrous reinforcement may be any of the traditionally used reinforcing fibres such as glass fibre, carbon fibre or aramid. Carbon fibre is preferred, and it is preferred that the carbon fibre comprise short randomly oriented fibres. The moulding compounds for use in this invention comprises a liquid or particulate epoxy resin matrix containing randomly oriented short fibres, such as the Hex MC materials available from Hexcel.

Such a molding compound for use in this invention is sometimes referred to as a "quasi-isotropic chopped molding compound", which means a molding compound that is provided as a mat made up of randomly oriented "chips" of chopped unidirectional tape, as described in United States Patent Application Publication 2012/0223183. The size of the chips may be varied depending upon the particular component being made. Typically the chips are about 0.8 cm wide, 5 cm long and 0.015 cm thick. The chips include unidirectional fibers that can be carbon, glass, aramid, polyethylene, or any of the fibers types that are commonly used in the reinforcement of curable resins. Carbon fibers are preferred. The chips are randomly oriented in the mat and they lay relatively flat. This provides the mat with its transverse isotropic properties.

The chips include an epoxy resin matrix. Epoxy resins are preferred. The resin content of the chips may also be varied depending upon structural or other requirements of the component being made. Chips with resin contents of 35 to 50 wt % are preferred.

The quasi-isotropic chopped molding compound for use in the present invention is made from unidirectional prepreg tape of desired width. The tape is chopped into chips of desired length and the chips are laid flat and pressed together to form a mat of randomly oriented chips. The chips bond together due to the presence of the molding compound resin. The preferred material is commercially available quasi-isotropic chopped molding compound, such as the quasi-isotropic chopped molding compound material available from Hexcel Corporation under the tradename HexMC^{®}. A variety of HexMC^{®} quasi-isotropic chopped molding compound are available that are made from unidirectional tapes that are available under the tradename HexPly^{®}. Similar materials are described in United States Patent Application Publication 2014/0377556.

At least two blanks, each comprising the quasi-isotropic chopped molding compound are employed in this invention. At least part of the blank that comprises the uppermost layer or lowermost layer in the location where a protuberance is to be formed is removed to provide a guide which causes the molding compound to flow during compression molding in order to form the protuberance. The blanks may be molded using traditional layup and preform fabrication techniques. Generally, the charge is made to fit within 3.0 to 12.3 mm (1/8 to 1/2 inch) of the part edge or more. The lay-up will flow to fill out the part edges, produce geometrical features and will flow into the removed area of the uppermost or lowermost layer of molding compound and into the cavities of the mold to form the desired protuberances.

It is preferred that the molding process be a "low flow" process. A low flow process comprises molding the quasi-isotropic chopped molding compound with a minimum disturbance of the chips' orientation, therefore preserving the transverse isotropic characteristic of the material. This is accomplished by keeping the flow of resin and fibers during the molding process at a level that does not re-orient or otherwise unduly disturb the alignment of the chips and their unidirectional fibers.

Tests conducted on finished parts have shown that low flow processing that maintains the straightened fibers in a strip, outperforms high flow processing. This performance improvement is thought to be due to the retention of the straightened fibers in the molding compound. High flow molding can destroy the chips by separating the fibers. The fibers get bent and crimped, producing a more homogeneous looking product. However, the bent and crimped fibers produce a product that does not perform as well as the product produced using low flow processing where the chips remain well defined.

It is preferred that the molding process employs a staging process that enables it to be molded at isothermal conditions. Un-staged alternatives are available with ramped press cycles or autoclave molding. Staging is an open-air oven process that generally transforms the quasi-isotropic chopped prepreg from a flexible material to a stiff solid state. Staging for 8 to 20 minutes at 160°C to 180°C is preferred. Staging times and temperatures are dependent on the thickness of the blank, the amount of flow desired, the amount of loading time desired and the final cure temperature. Once staged the material is allowed to cool, and can be stored in a freezer for later processing.

Final cure time is a function of the isothermal cure temperature. As a general rule, 5 minutes of cure time is added for every 0.152 cm increase in thickness, with the minimum time being set for curing a 0.3 cm part (for example 10 minutes at 205°C). Lower isothermal cure temperatures may be used to facilitate part loading or to allow more time to equalize the charge temperature in thick parts before pressing. If staging is not desired, it is possible to lay up in the mold and perform a traditional ramp and dwell cure on the part. However, staging is preferred in order to control flow of resin during the molding process.

Exemplary process temperatures for molding of the quasi-isotropic chopped epoxy resin based blanks are staging for 10 minutes at 180°C, followed by curing for 10 minutes at 205°C. The part is post cured for 2 hours at 180°C. Exemplary processing temperatures for quasi-isotropic chopped prepreg using M21 epoxy resin from Hexcel are staging for 20 minutes at 160°C, followed by curing for 45 minutes at 180°C. The part is also post cured for 2 hours at 180°C.

The blanks are molded at pressures in the range of 750-2000 psi usually using matched metal molds with shear edges (0.03 cm or less). The isothermal mold temperature may range from 80°C to 205°C, with cure times ranging from 2 to 45 minutes. High pressure molding is typically useful for making parts with complex shapes.

This invention is suitable for the manufacture of a wide variety of components for automobiles, aerospace vehicles, wind energy devices and sporting goods that have been traditionally made using aluminum, steel, titanium and their alloys. Exemplary aerospace parts include aircraft window frames, wing fairing supports, flange supports, frame gussets, rudder actuator brackets, shear ties, seat pedestals, cargo floor flange supports, storage bin fittings, antenna supports, torque tube pans, handle boxes, side guide fittings, wing box covers and intercostals. Automobile components include rails, pillars, panels, roof bows and the like. The invention enables reinforcing or stiffening ribs to be integrally molded in the component. Quasi-isotropic chopped molding compound is the preferred material for producing components where bending, riveted or bolted joints is involved and where damage tolerance is a requirement. Using quasi-isotropic chopped molding compound to make composite connectors for joining components together with bolts or rivets is preferred because open holes in the composite connector cause very little change in the performance response of the connector. It was found that the presence of a 0.6 cm hole in a component made using quasi-isotropic chopped molding compound had a negligible effect on the strength of the part. This is different from conventional molding compound where such a hole drives failure of the part. In addition, components made using quasi-isotropic chopped molding compound showed strength that is independent of loading direction when the part is loaded in the plane of the part.

The resins used in the moulding compound blanks that are used in the present invention are epoxy resins, and we prefer to use fast cure epoxy resins. The curing of epoxy resin is an exothermic reaction, and care must be taken to avoid reaction runaway and the overheating of the material in the mould, which can cause damage to both the moulding materials and the mould itself.

The cure cycles employed for curing stacks of blanks of the moulding compound as in this invention are a balance of temperature and time taking into account the reactivity of the resin and the amount of resin and fibrous reinforcement employed in the blanks. From an economic point of view it is desirable that the cycle time be as short as possible, and so curing agents and accelerators are usually included in the epoxy resin. As well as requiring heat to initiate curing of the resin, the curing reaction itself can be highly exothermic, and this needs to be taken into account in the time/temperature curing cycle, in particular for the curing of large and thick stacks of blanks. This is increasingly the case with the production of mouldings for industrial applications which require large amounts of epoxy resin, which in turn can result in excessive temperatures being generated within the stack due to the exotherm of the resin curing reaction. Excessive temperatures are to be avoided as they can damage the mould or cause some decomposition of the resin. Excessive temperatures can also cause loss of control over the cure of the resin leading to run away cure.

Generation of excessive temperatures can be a greater problem when thick sections comprising many layers of blanks are to be cured, as is becoming more prevalent in the production of fibre reinforced laminates for heavy industrial use, such as in the production of wind turbine structures, particularly wind turbine spars and shells from which the blades are assembled.

A thick stack of epoxy based blanks, such as 60 or more layers, can require cure temperatures above 100°C for several hours. However, the cure can have a reaction enthalpy of 150 joules per gram of epoxy resin or more, and this reaction enthalpy brings the need for a dwell time during the cure cycle at below 100°C to avoid overheating and decomposition of the resin. Furthermore, following the dwell time it is necessary to heat the stack further to above 100°C (for example to above 125°C) to complete the cure of the resin. It would be beneficial to employ a shorter cure cycle. In addition, the high temperatures generated can cause damage to the mould or bag materials or require the use of special and costly materials for the moulds or bags.

Another important property for many blanks is that prior to curing they can be readily handled, transported and laid up in a mould ready for curing. Additionally, it is desirable to eliminate or minimise the presence of captured air pockets within or between the blanks, as these can lead to irregularities in the cured structure. The blanks preferably have sufficient strength to enable them to be laid up in stacks combined with a low level of tack so that they can be readily handled and will not pick up dirt and other impurities.

In addition, once cured the epoxy based structure can have a glass transition temperature (Tg) above which the moulding is not sufficiently self-supporting to enable it to be removed from the mould. In this situation it is necessary to allow the moulding to cool down to below the Tg before it can be removed from the mould. There is therefore a desire to produce laminar structures from blanks in which the resin when cured has a high glass transition temperatures (Tg) to enable the cured material to be sufficiently stiff to be removed from the mould shortly after curing or upon curing to a desired level, typically at least 95%. It is therefore preferred that the Tg be at or near the maximum temperature. Increase in the Tg may be achieved by using a more reactive resin. However the higher the reactivity of the resin the greater the heat released during curing of the resin in the presence of hardeners and accelerators which can increase the need for dwell time and delay before removal from the mould.

Resins can be characterised by their Phase angle. The Phase angle is used to describe the physical state of the resin. The Phase angle is low when the resin will not flow and is a solid or semi sold; and the Phase angle increases as the ability to flow increases, for example when the temperature of the resin is increased. However in epoxy resin systems that contain a curative which is normally heat activated, the cross linking action of the epoxy resin due to the action of the curative will cause the resin to harden and the phase angle to drop at elevated temperature. The Phase angle can therefore be used to determine the form of the resin and the temperature at which a moulding will be sufficiently solid to be readily removed from the mould. The moulding conditions used in this invention therefore seek to reduce the temperature at which the desirable lower Phase angle is obtained and/or to reduce the moulding time required to reach the desirable low Phase angle. When a Phase angle below 20°C, preferably below 15°, more preferably below 10° is reached, a moulding can be removed from the mould. Additionally the phase angle should be such that the resin will flow in the direction determined by the guides in order to enter any recesses in the mould cavity.

The desire for higher Tg and low Phase angle in the mouldings produced by this invention is preferably balanced with requirements for handleability of the blanks and with the economic needs to minimise the time required for the moulding cycle. The moulding cycle for the blanks involves four stages:
i) the provision (laying up) of blanks in the mould;
ii) the flow of the moulding compound under heat and pressure as determined by the guides into recesses in the mould to create the protuberance(s);
iii) the curing reaction; and
iv) the removal of the cured product from the mould.

We therefore prefer to use an epoxy resin system which provides blanks that can be easily provided to a mould, can be rapidly caused to flow, can be cured rapidly at a particular temperature and which enables the cured material to be demoulded at temperatures near to or at the curing temperature.

We prefer to use an epoxy resin formulation containing a curative that can be cured at 150°C to 95% cure in no more than 150 seconds, and can be cured at 120°C to 95% cure in no more than 4 minutes to provide a cured resin having a Tg no greater than 140°C. The cured epoxy resin formulation preferably has a Phase angle below 20° at a temperature below 140°C. Preferably below 15°, more preferably below 10°. The phase angle may be above 1⁰ or 2⁰ or 3⁰ or 4⁰.

Within this application, the cure time for the resin formulation is defined as the time required for 95% cure. The Tg of the resin is measured according to Differential Mechanical Analysis according to (Test Method ASTM D7028) and the Tg is considered to be the temperature at which there is an onset of the drop in storage modulus.

The epoxy resin composition may comprise one or more urea based curing agents and it is preferred to use from 4 to 10 wt % based on the weight of the epoxy resin of a curing agent, more preferably 4 to 6 wt %, more preferably from 4 to 5 wt %. Preferred urea based materials are the isomers of 2,6 and 2,4 toluene bis dimethyl urea (known as 2,6 and 2,4 TDI urone) such as the range of materials available under the commercial name DYHARD^{®} the trademark of Alzchem. The composition further comprises a hardener such as dicyandiamide and it is preferred to use from 7% to 10%, more preferably from 8 to 10, most preferably from 8.5 to 9.5% by weight of the hardener. The rapid cure time is achieved by matching the ratio of the curative and the accelerator to the amount of available reactive groups in the epoxy formulation. The higher Tg is obtained by use of a resin having a functionality of at least 2 to provide sufficient reactive groups. The handleability of the prepreg is likewise determined by the nature and amount of the fibrous reinforcement and the nature and amount of the epoxy resin.

The epoxy resin used in this invention preferably has a functionality of at least 2 and an average epoxy equivalent weight (EEW) from 150 to 1500, preferably from 200 to 800, more preferably from 300 to 600 and most preferably from 200 to 500 and/or combinations thereof, the resin being curable by an externally applied temperature at 150°C in no more than 150 seconds to provide a cured resin having a Tg no greater than 140°C and preferably with a Phase angle when cured of less than 20° at temperatures of 140°C or below. The fast cure and the high Tg are obtained by selecting the ratio of curative and hardener to obtain the desired reactivity of the epoxy resin. The average EEW is defined as the average molecular weight of the resin divided by the number of epoxy groups per molecule.

Typically amounts of curative and hardener that are used in order to get the rapid cure are from 4 to 10 wt %, more preferably 4 to 6 wt % of the urea based curing agent. A particularly good results have been obtained when using from 4.25 to 4.75 wt % of the urea based curing agent based on the weight of epoxy resin is used and from 6 to 10 wt %, more preferably 7 to 10 wt % of the hardener such as dicyandiamide, particularly good results have been obtained when using 8.5 to 9.5 wt % dicyandiamide especially in combination with 4.25 to 4.75 wt % of the urea based curing agent.

The blanks used in this invention are typically used at a different location from where they are manufactured and they therefore require handleability. It is therefore preferred that they are dry, or as dry as possible, and have low surface tack at ambient temperature. Accordingly it is preferred to use high viscosity resins in the production of the blanks. This also has the benefit that the impregnation of the fibrous layer is slow, allowing air to escape and to minimise void formation.

The fibre and resin volume % of a moulding material used in this invention can be determined from the weight % of fibre and resin by dividing the weight % by the respective density of the resin and carbon fibre.

The % of impregnation of a tow or fibrous material which is impregnated with resin is measured by means of a water pick up test. The water pick up test is conducted as follows. Six strips of resin impregnated reinforcement are cut of size 100 (+/-1-2) mm x 100 (+/-1-2) mm. Any backing sheet material is removed. The samples are weighed to the nearest 0.001 g (W1). The strips are located between PTFE backed aluminium plates so that 15 mm of the prepreg strip protrudes from the assembly of PTFE backed plates on one end and whereby the fibre orientation of the strips extends along the protruding part. A clamp is placed on the opposite end, and 5 mm of the protruding part is immersed in water having a temperature of 23°C, relative air humidity of 50% +/- 35%, and at an ambient temperature of 23°C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=((<W2>- <W1 >)/<W1 >)x100. The WPU(%) is indicative of the Degree of Resin Impregnation (DRI).

Typically, the values for the resin content by weight for the uncured blanks used in the invention are in the ranges of from 15 to 70% by weight of the blank, from 18 to 68% by weight of the blank, from 20 to 65% by weight of the blank, from 25 to 60% by weight of the blank, from 25 to 55% by weight of the blank, from 25 to 50% by weight of the blank, from 25 to 45% by weight of the blank, from 25 to 40% by weight of the blank, from 25 to 35% by weight of the blank, from 25 to 30% by weight of the blank, from 30 to 55% by weight of the blank, from 35 to 50% by weight of the blank and/or combinations of the aforesaid ranges.

Typically, the values for the resin content by volume for the uncured blanks used in the invention are in the ranges of from 15 to 70% by volume of the blank, from 18 to 68% by volume of the blank, from 20 to 65% by volume of the blank, from 25 to 60% by volume of the blank, from 25 to 55% by volume of the blank, from 25 to 50% by volume of the blank, from 25 to 45% by volume of the blank, from 25 to 40% by volume of the blank, from 25 to 35% by volume of the blank, from 25 to 30% by volume of the blank, from 30 to 55% by volume of the blank, from 35 to 50% by volume of the blank and/or combinations of the aforesaid ranges.

Water pick up values for the uncured blanks used in the invention may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges.

The epoxy resin formulation which is used as the matrix resin material in the blanks of the present invention preferably has a storage modulus G' of from 3 x 10⁵ Pa to 1 x 10⁸ Pa and a loss modulus G" of from 2 x 10⁶ Pa to 1 x 10⁸ Pa at room temperature (20 °C).

Preferably, the resin material has a storage modulus G' of from 1 x 10⁶ Pa to 1 x 10⁷ Pa, more preferably from 2 x 10⁶ Pa to 4 x 10⁶ Pa at room temperature (20 °C). Preferably, the resin material has a loss modulus G" of from 5 x 10⁶ Pa to 1 x 10⁷ Pa, more preferably from 7 x 10⁶ Pa to 9 x 10⁶ Pa at room temperature (20 °C).

Preferably, the resin material has a complex viscosity of from 5 x 10⁵ Pa.s to 1 x 10⁷ Pa.s, more preferably from 7.5 x 10⁵ Pa.s to 5 x 10⁶ Pa.s at room temperature (20 °C). Preferably, the resin material has a complex viscosity of from 1 x 10⁶ Pa.s to 2 x 10⁶ Pa.s at room temperature, and preferably from 5 to 30 Pa.s at 80°C, more preferably from 10 to 25 Pa.s at 80°C. Preferably, the resin material is an epoxy resin.

In viscoelastic materials the stress and strain will be out of phase by an angle delta. The individual contributions making the complex viscosity are defined as G' (Storage Modulus) = G <*>x cos (delta); G" (Loss Modulus) = G <*>x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" =0 and the phase angle delta is 0°, and for a purely viscous liquid, G -0 and the phase angle delta is 90°.

The loss modulus G" indicates the irreversible flow behaviour and a material with a high loss modulus G" is also desirable to prevent the early creep-like flow and maintain an open air path for longer. Therefore the resin used in the prepregs of the present invention has a high storage modulus and a high loss modulus, and correspondingly a high complex modulus, at a temperature corresponding to a typical lay-up temperature, such as room temperature (21 °C).

In this specification, the viscoelastic properties, i.e. the storage modulus, loss modulus and complex viscosity, of the resin used in the blanks of the present invention were measured at application temperature (i.e. a lay-up temperature of 20°C) by using a Bohlin VOR Oscillating Rheometer with disposable 25 mm diameter aluminium plates. The measurements were carried out with the following settings: an oscillation test at increasing temperature from 50°C to 150°C at 2°C/mm with a controlled frequency of 1.59 Hz and a gap of 500 µm.

In the manufacture of a structural member using the moulding material or structure of the present invention, preferably the resin has a high loss modulus G" between 2 x 10⁶ Pa and 1 x 10⁸ Pa at 20°C, more preferably from 5 x 10⁶ Pa to 1 x 10⁷ Pa, yet more preferably from 7 x 10⁶ Pa to 9 x 10⁶ Pa.

The resin material preferably has a high complex viscosity at 20°C of from 5 x 10⁵ Pa.s to 1 x10⁷ Pa.s, more preferably from 7.5 x 10⁵ Pa.s to 5 x 10⁶ Pa.s, yet more preferably from 1 x 10⁶ Pa.s to 2 x 10⁶ Pa.s. In order to produce final parts with substantially uniform mechanical properties it is important that the structural fibres and the epoxy resin be mixed to provide a substantially homogenous quasi-isotropic moulding material. This requires uniform distribution of the structural fibres within the moulding material to provide a substantially continuous matrix of the resin surrounding the fibres. It is therefore important to minimise the encapsulation of air bubbles within the resin during application to the fibres. It is therefore preferred to use high viscosity resins.

The preferred epoxy resin formulation for use as the matrix resin material in the blanks used in this invention preferably has a storage modulus G' of from 3 x 10⁵ Pa to 1 x 10⁸ Pa and a loss modulus G" of from 2 x 10⁶ Pa to 1 x 10⁸ Pa at room temperature (20 °C).

Preferably, the resin material has a storage modulus G' of from 1 x 10⁶ Pa to 1 x 10⁷ Pa, more preferably from 2 x 10⁶ Pa to 4 x 10⁶ Pa at room temperature (20 °C).

Preferably, the resin material has a loss modulus G" of from 5 x 10⁶ Pa to 1 x 10⁷ Pa, more preferably from 7 x 10⁶ Pa to 9 x 10⁶ Pa at room temperature (20 °C).

Preferably, the resin material has a complex viscosity of from 5 x10⁵ Pa.s to 1 x 10⁷ Pa.s, more preferably from 7.5 x 10⁵ Pa to 5 x 10⁶ Pa.s at room temperature (20 °C), and most preferably from 1 x 10⁶ Pa.s to 2 x 10⁶ Pa.s.

Preferably, the resin material has a viscosity of from 5 to 30 Pa.s at 80°C, more preferably from 10 to 25 Pa.s at 80°C.

Preferably, the resin material is an epoxy resin.

In order to produce final parts with substantially uniform mechanical properties using the techniques of the present invention it is important that the reinforcing fibres and the epoxy resin be mixed to provide substantially homogenous moulding compound. This requires uniform distribution of the reinforcing fibres within the moulding compound to provide a substantially continuous matrix of the resin surrounding the fibres. Where a liquid resin is employed it is therefore important to minimise the encapsulation of air bubbles within the resin during application to the fibres. It is therefore preferred to use high viscosity resins. The moulding compound should contain a low level of voids, and it is therefore preferred that the moulding compound has a water pick-up value of less than 9%, more preferably less than 6%, most preferably less than 3%. The water pick-up test determines the degree of waterproofing or impregnation of moulding compounds. For this purpose, a specimen of the mould compound is initially weighed and clamped between two plates in such a way that a strip of specimen 15 mm wide protrudes. This arrangement is suspended in the direction of the fibres in a water bath for 5 minutes. After removing the plates, the specimen is again weighed. The difference in weight is used as a measured value for the degree of impregnation. The smaller the amount of water picked up, the higher the degree of waterproofing or impregnation.

The blanks used in this invention can be laid-up with other layers of materials which may be other composite materials (e.g. other blanks of the moulding compound used in this invention or other prepregs) to produce a stack of blanks which can be provided with the guide and cured to produce a fibre reinforced laminate provided with protuberances. In other embodiments the blanks may be laid up with other layers such as metal foils such as steel and aluminium foil.

The moulding compound is typically produced as a roll and in view of the tacky nature of such materials, a backing sheet is generally provided to enable the roll to be unfurled at the point of use.

The epoxy resin of functionality at least 2 used in this invention has a high reactivity. The epoxy equivalent weight (EEW) of the resin is in the range from 150 to 1500, preferably of from 200 to 500 and the resin composition comprises the epoxy resin in combination with an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidylether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, Ml) DEN439 (from Dow Chemicals), Araldite ECN 1273 (from Huntsman Advanced Materials), and Araldite ECN 1299 (from Huntsman Advanced Materials).

The reinforcing fibres used in the moulding compound used in this invention may be synthetic or natural fibres or any other form of material or combination of materials that, combined with the resin composition of the invention, forms a composite product. The reinforcement web can either be provided via spools of fibre that are unwound or from a roll of textile. Exemplary fibres include glass, carbon, graphite, boron, ceramic and aramid. Preferred fibres are carbon and glass fibres particularly carbon fibres.

Hybrid or mixed fibre systems may also be envisaged. The use of cracked (i.e. stretch-broken) or selectively discontinuous fibres may be advantageous to facilitate lay-up of the product according to the invention and improve its capability of being shaped. Although a unidirectional fibre alignment is preferable, other forms may also be used. Typical textile forms include simple textile fabrics, knit fabrics, twill fabrics and satin weaves. It is also possible to envisage using non-woven or non-crimped fibre layers. The surface mass of fibres within the fibrous reinforcement is generally 80-4000 g/m² preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fibreglass reinforcements, fibres of 600-2400 tex are particularly adapted.

Exemplary layers of unidirectional fibrous tows are made from HexTow^{®} carbon fibres, which are available from Hexcel Corporation. Suitable HexTow^{®} carbon fibres for use in making unidirectional fibre tows include: IM7 carbon fibres, which are available as tows that contain 6,000 or 12,000 filaments and weight 0.223 g/m and 0.446 g/m respectively; IM8- IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

When the blanks used in this invention are based on moulding compound based on liquid resins they may be produced by impregnating the fibrous material with the epoxy resin. In order to increase the rate of impregnation, the process is preferably carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 80°C.

The resin composition can be spread onto the external surface of a roller and coated onto a paper or other backing material to produce a layer of curable resin. The resin composition can then be brought into contact with the fibrous layer for impregnation perhaps by the passage through rollers. The resin may be present on one or two sheets of backing material, which are brought into contact with the structural fibrous layer and by passing them through heated consolidation rollers to cause impregnation. Alternatively the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The structural fibrous layer may then be placed into the resin and optionally a second resin layer may be provided on top of the fibrous layer to produce the moulding compound.

A backing sheet can be applied either before or after impregnation of the resin. However, it is typically applied before or during impregnation as it can provide a non-stick surface upon which to apply the pressure required for causing the resin to impregnate the fibrous layer.

Once prepared the moulding compound may be rolled-up, so that it can be stored for a period of time. It can then be unrolled and cut into blanks as desired and laid up with other blanks to form a stack in a mould. The appropriate part of the uppermost or lowermost layer or layers in the stack at the location where the guide is to be provided and where protuberances are to be formed may be removed, preferably prior to placement in the mould.

The guide may be formed at the surface of the blank by removal of material from at least the uppermost or lowermost surface of the blank in order to provide the location for the flow of the moulding compound to produce the protuberances. This may be accomplished in any suitable manner that ensures the location of the removal of material matches the contours of the mould surface which provide the recesses in the mould cavity which allow formation of the protuberances. The stack of blanks may comprise from 2 to several blanks, for example a stack may contain up to 60 blanks, perhaps as many as 80 blanks. The stack may be formed and then the material removed from one or more blanks at the uppermost or lowermost surface of the stack, always ensuring that there are sufficient number of blanks lower in the stack with no material removed to support the resin, as the guides cause it to flow into the removed areas and into the recesses of the mould cavity to form the protuberances. The optimum extent of removal will depend upon the component to be produced, the number of layers in the stack and the size and shape of the protuberance or protuberances that is or are to be formed during the moulding process.

Once it is created in the mould the stack of blanks may be cured by exposure to an externally applied elevated temperature, and elevated pressure, to first cause the resin to soften and flow as determined by the guides and the cure to produce a cured laminate provided with the protuberances.

The exotherm due to the curing of the blanks may take the temperatures within the stack to above 110°C, however we have found that if the externally applied temperature is within the range of 70°C to 110°C, curing of blanks based on an epoxy resin of EEW from 150 to 1500 particularly of EEW from 200 to 500 can be accomplished at a temperature of about 150°C in less than 150 seconds to provide a cured resin having a Tg of between 130 and 140°C and a Phase angle at 140°C of 20° or lower, so that the cured article can be removed from the mould without undue delay.

The curing process may be carried out at a pressure in the range 5100 kPa to 13800 kPa. The curing process may be carried out employing one or more externally applied temperatures in the range of from 70°C to 110°C, for a time sufficient to cure the epoxy resin composition to the desired degree. In particular it is preferred that the curing cycle has a duration of less than three hours.

Upon curing, the blank becomes a composite laminate provided with protuberances such as reinforcing or stiffening ribs, suitable for use in a structural application, such as for example an automotive, marine vehicle or an aerospace structure or a wind turbine structure such as a shell for a blade or a spar or in sporting goods such as skis. Such composite laminates can comprise structural fibres at a level of from 80% to 15% by volume, preferably from 58% to 65% by volume.

The present invention is illustrated by reference to the accompanying drawings in which
Figure 1 shows a mould for use in this invention to provide protuberances from a stack of blanks.
Figure 2 is a close up of a section of the mould showing cavities for the production of ribs on the moulding.
Figure 3 shows stack of blanks in which material has been removed from the upper layer of the blank to provide a guide according to this invention.
Figure 4 shows a moulding obtained by compression moulding the stack of blanks of Figure 3 in the mould of Figure 1.

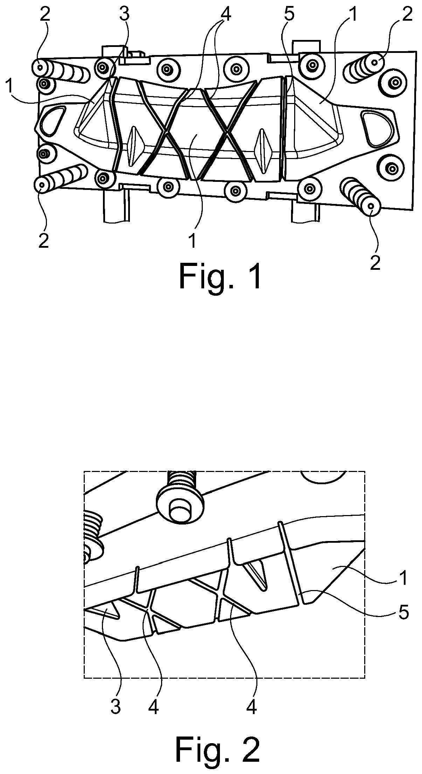

Figure 1 shows half of a compression mould useful in the present invention: showing the moulding surface (1) and locator pins (2) for location with the other half of the mould (not shown). The mould is provided with recesses (3), (4) and (5) where ribs are to be produced during compression moulding. Figure 2 is a close up of the surface of the mould shown in Figure 1.

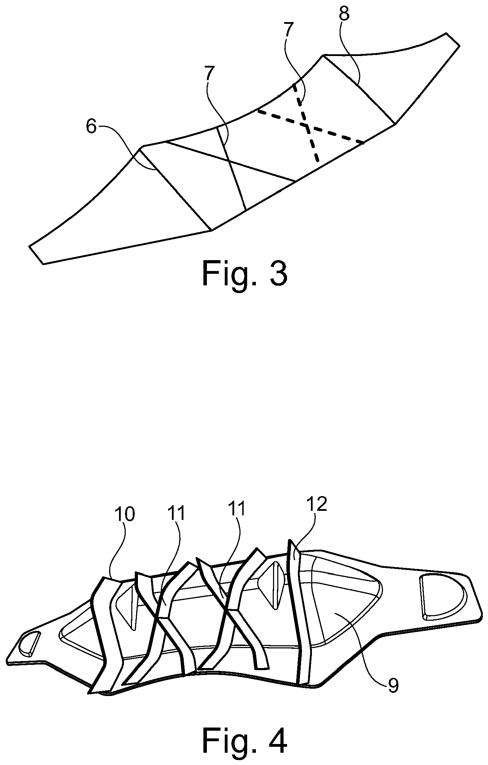

Figure 3 shows a blank according to this invention in which guides (6), (7) and (8) are formed in the surface of the blank. The guides are formed to correspond with the recesses (3), (4) and (5) formed in the surface of the mould.
Figure 4 shows the moulded stack of blanks (9) provided with the ribs (10), (11) and (12) formed at the positions of the guides (6), (7) and (8) and the corresponding recesses (3), (4) and (5).

## Claims

1. A process for the production of three dimensional mouldings from a two dimensional blank comprising providing a stack of at least two blanks, each blank comprising a quasi-isotropic chopped moulding compound comprising a fibrous reinforcement material and a liquid or particulate epoxy resin material in the form of randomly orientated chips of chopped unidirectional tape;
removing at least part of the uppermost or lowermost blank at the location where protrusions are to be formed during moulding and compression to create a recess at the surface of the blank in the form of a slit or cut for directing flow at the surface of the moulding compound within the cavity of the compression mould during compression moulding;
and moulding the stack of blanks in a compression mould designed for formation of the three dimensional moulding under conditions whereby the removed portion acts as a guide so that the moulding compound flows into the removed area in the uppermost or lowermost layer and the sections of the mould defining the three dimensional structure to produce a three dimensional moulding.

2. A process according to claim 1, wherein the mould cavity contains one or more recesses into which the moulding compound is guided by the guide.

3. A process according to any of the preceding claims in which the fibrous reinforcement is glass fibre, carbon fibre or aramid.

4. A process according to any of the preceding claims, wherein the chips have a resin content of from 35 to 50 wt %.

5. A process according to any of the preceding claims in which the compression moulding comprises a staged process comprising moulding at isothermal conditions and/or wherein the compression moulding comprises moulding at a pressure in the range of 5100 kPa to 13800 kPa at a temperature in the range of from 80°C to 205°C for 2 to 45 minutes.

## Patentansprüche

1. Verfahren zum Herstellen dreidimensionaler Formteile aus einem zweidimensionalen Rohling, umfassend ein Bereitstellen eines Stapels von mindestens zwei Rohlingen,jeder Rohling umfassend eine quasi-isotrope, zerkleinerte Formmasse, umfassend ein faseriges Verstärkungsmaterial und ein flüssiges oder teilchenförmiges Epoxidharzmaterial in Form von zufällig ausgerichteten Spänen aus zerkleinertem unidirektionalem Band;
Entfernen mindestens eines Teils des obersten oder untersten Rohlings an der Stelle, an der während des Formens und Pressens Vorsprünge gebildet werden sollen, um an der Oberfläche des Rohlings eine Aussparung in Form eines Schlitzes oder Einschnitts zu schaffen, um während des Pressens einen Fluss an der Oberfläche der Formmasse innerhalb des Hohlraums der Pressform zu lenken;
und Formen des Stapels von Rohlingen in einer Pressform, die zum Bilden des dreidimensionalen Formteils konstruiert ist, unter Bedingungen, bei denen der entfernte Abschnitt als Führung wirkt, sodass die Formmasse in den entnommenen Bereich in der obersten oder untersten Schicht und die Segmente der Form, die die dreidimensionale Struktur definieren, fließt, um ein dreidimensionales Formteil zu erzeugen.

2. Verfahren nach Anspruch 1, wobei der Formhohlraum eine oder mehrere Aussparungen enthält, in die die Formmasse durch die Führung geführt wird.

3. Verfahren nach einem der vorhergehenden Ansprüche, bei dem die faserige Verstärkung Glasfaser, Kohlenstofffaser oder Aramid ist.

4. Verfahren nach einem der vorherigen Ansprüche, wobei die Späne einen Harzgehalt von 35 bis 50 Gew.-% aufweisen.

5. Verfahren nach einem der vorherigen Ansprüche, bei dem das Formpressen einen abgestuften Prozess umfasst, umfassend ein Formen bei isothermen Bedingungen und/oder wobei das Formpressen ein Formen bei einem Druck in dem Bereich von 5100 kPa bis 13800 kPa bei einer Temperatur in dem Bereich von 80 °C bis 205 °C über 2 bis 45 Minuten umfasst.

## Revendications

1. Procédé permettant la production de moulages tridimensionnels à partir d'une ébauche bidimensionnelle comprenant la fourniture d'un empilement d'au moins deux ébauches, chaque ébauche comprenant un composé de moulage haché quasi-isotrope comprenant un matériau de renforcement fibreux et un matériau de résine époxy liquide ou particulaire sous la forme de copeaux de ruban unidirectionnel haché orientés aléatoirement ;
le retrait d'au moins une partie de l'ébauche la plus haute ou la plus basse au niveau de l'emplacement où les protubérances doivent être formées durant le moulage et la compression afin de créer un évidement à la surface de l'ébauche sous la forme d'une fente ou d'une coupe destinée à diriger l'écoulement à la surface du composé de moulage à l'intérieur de la cavité du moule de compression durant le moulage par compression ;
et le moulage de l'empilement d'ébauches dans un moule de compression conçu pour la formation du moulage tridimensionnel dans des conditions moyennant quoi la partie retirée agit en tant que guide afin que le composé de moulage s'écoule dans la zone retirée dans la couche la plus haute ou la plus basse et les sections du moule définissant la structure tridimensionnelle pour produire un moulage tridimensionnel.

2. Procédé selon la revendication 1, ladite cavité de moule contenant un ou plusieurs évidements dans lesquels le composé de moulage est guidé par le guide.

3. Procédé selon l'une quelconque des revendications précédentes, dans lequel le renfort fibreux est de la fibre de verre, de la fibre de carbone ou de l'aramide.

4. Procédé selon l'une quelconque des revendications précédentes, lesdits copeaux possédant une teneur en résine allant de 35 à 50 % en poids.

5. Procédé selon l'une quelconque des revendications précédentes, ledit moulage par compression comprenant un processus par étapes comprenant le moulage dans des conditions isothermes et/ou ledit moulage par compression comprenant le moulage à une pression comprise dans la plage de 5100 kPa à 13 800 kPa à une température comprise dans la plage allant de 80°C à 205°C pendant 2 à 45 minutes.
